# EUROPÄISCHE PATENTSCHRIFT

(11) **EP 3 516 964 B1**
(45) Veröffentlichungstag und Bekanntmachung des Hinweises auf die Patenterteilung: **25.02.2026**
(21) Anmeldenummer: 18153614.5
(22) Anmeldetag: 26.01.2018
(51) Int. Cl.: A22C 21/00

(54) **HALTEVORRICHTUNG ZUM HALTEN VON ENTWEIDETEN GEFLÜGELKÖRPERN ODER TEILEN DAVON WÄHREND DER BEARBEITUNG IN EINER VORRICHTUNG ZUR VERARBEITUNG VON ENTWEIDETEN GEFLÜGELKÖRPERN ODER TEILEN DAVON**
HOLDING APPARATUS FOR HOLDING EVISCERATED POULTRY CARCASSES OR PARTS THEREOF DURING PROCESSING IN AN APPARATUS FOR PROCESSING EVISCERATED POULTRY CARCASSES OR PARTS THEREOF
DISPOSITIF DE MAINTIEN POUR MAINTENIR DES CARCASSES DE VOLAILLE ÉVISCÉRÉES OU DES PARTIES DE CELLES-CI PENDANT LE TRAITEMENT DANS UN DISPOSITIF DE TRAITEMENT DE CARCASSES DE VOLAILLE ÉVISCÉRÉES OU DE PARTIES DE CELLES-CI

(43) Veröffentlichungstag der Anmeldung: 31.07.2019
(73) Patentinhaber: NORDISCHER MASCHINENBAU RUD. BAADER GMBH + CO KG, 23560 Lübeck (DE)
(72) Erfinder: RIGGERT, Lasse, 23554 Lübeck (DE); SCHRÖDER, Matthias, 23617 Stockelsdorf (DE); SCHULZE, Adrian, 23564 Lübeck (DE)
(74) Vertreter: Stork Bamberger Patentanwälte PartmbB

(56) Entgegenhaltungen:
- EP-A1- 3 062 620
- EP-A2- 0 401 528
- EP-B1- 3 062 620
- WO-A1-2008/022787
- US-A- 4 716 624
- US-A- 5 951 393

## Beschreibung

Die Erfindung betrifft eine Haltevorrichtung, ausgebildet und eingerichtet zum Halten von entweideten Geflügelkörpern oder Teilen davon während der Verarbeitung in einer Vorrichtung zur Verarbeitung von entweideten Geflügelkörpern oder Teilen davon, umfassend einen Stützkörper, ausgebildet und eingerichtet zum Stützen des Geflügelkörpers oder Teilen davon, einen Befestigungskörper, ausgebildet und eingerichtet zum Halten des Stützkörpers einerseits und zum Befestigen der Haltevorrichtung an einer umlaufenden Transporteinheit der Vorrichtung zur Verarbeitung von entweideten Geflügelkörpern oder Teilen davon andererseits, sowie eine Klemmeinrichtung zum Fixieren des Geflügelkörpers oder Teilen davon auf dem Stützkörper während der Verarbeitung.

Die Erfindung betrifft weiterhin eine Transportvorrichtung, ausgebildet und eingerichtet zum Transportieren von entweideten Geflügelkörpern oder Teilen davon, umfassend eine umlaufend angetriebene Transporteinheit sowie mindestens eine daran befestigte Haltevorrichtung, die zum Halten der entweideten Geflügelkörper oder Teilen davon während der Verarbeitung in einer Vorrichtung zur Verarbeitung von entweideten Geflügelkörpern oder Teilen davon ausgebildet und eingerichtet ist.

Die Erfindung befasst sich weiterhin mit der Verwendung einer Transportvorrichtung in einer Vorrichtung zur Verarbeitung von entweideten Geflügelkörpern oder Teilen davon.

Die vorliegende Offenbarung ist des Weiteren auf eine Vorrichtung zur Verarbeitung von entweideten Geflügelkörpern oder Teilen davon gerichtet, die mindestens eine Bearbeitungsstation zum Bearbeiten der Geflügelkörper oder Teilen davon sowie eine Transportvorrichtung zum Transportieren der Geflügelkörper oder Teilen davon entlang der oder jeder Bearbeitungsstation umfasst.

Schließlich befasst sich die Erfindung mit einem Verfahren zur Wartung einer Haltevorrichtung, die zum Halten von entweideten Geflügelkörpern oder Teilen davon während der Verarbeitung in einer Vorrichtung zur Verarbeitung von entweideten Geflügelkörpern oder Teilen davon ausgebildet und eingerichtet ist, wobei die Haltevorrichtung einen Befestigungskörper, mit dem die Haltevorrichtung an einer Transporteinheit der Vorrichtung zur Verarbeitung befestigt ist, und einen Stützkörper, der lösbar an dem Befestigungskörper angeordnet und zum Stützen von Geflügelkörpern oder Teilen davon ausgebildet und eingerichtet ist, umfasst.

In der Geflügel verarbeitenden Industrie werden entweidete Geflügelkörper oder Teile davon in entsprechenden Vorrichtungen verarbeitet. Üblicherweise sind mehrere Haltevorrichtungen an einer umlaufenden Transporteinheit befestigt, mittels der die Geflügelkörper oder Teile davon einer oder mehreren Bearbeitungsstationen zugeführt bzw. in deren Wirkbereich gebracht werden. Zur Verarbeitung werden die Geflügelkörper oder Teile davon auf die Haltevorrichtung gesattelt und fixiert. Bei der Verarbeitung kommt es naturgemäß zu erheblichen Verunreinigungen der Haltevorrichtungen und der Transportvorrichtung insgesamt. Zur Wartung der Haltevorrichtungen ist die Vorrichtung zur Verarbeitung außer Betrieb zu setzen. Als Wartung wird u. a. die Reparatur, der Austausch von Einzelteilen und insbesondere auch die Reinigung der Vorrichtung sowie von Einzelteilen derselben verstanden. Gerade die Reinigung der Vorrichtung zur Verarbeitung und insbesondere der Haltevorrichtungen sowie der Transportvorrichtungen ist zur Einhaltung bestehender Hygienevorschriften von besonderer Bedeutung. Für eine sichere und zuverlässige Reinigung der Haltevorrichtungen ist der Stützkörper vom Befestigungskörper zu lösen, so dass die beiden Körper unterschiedlichen Reinigungsverfahren und/oder Reinigungsmedien zugeführt werden können und insbesondere auch der Bereich unterhalb des Stützkörpers sowie der Befestigungskörper mit der Klemmeinrichtung effektiv gereinigt werden kann.

Bei den bisher bekannten Haltevorrichtungen, die auch als Transportsattel bezeichnet werden, ist der Stützkörper lösbar mit dem Befestigungskörper verbunden. Dabei bildet der Befestigungskörper die so genannte Sattelmechanik, die auch die Klemmeinrichtung umfasst. Der Stützkörper ist als Sattel bekannt. Um den Stützkörper vom Befestigungskörper lösen zu können, ist jedoch die gesamte Haltevorrichtung von der Transporteinheit zu lösen. Der Stützkörper lässt sich bei bekannten Ausführungen nur dann vom Befestigungskörper trennen, wenn die gesamte Einheit von der Transporteinheit entfernt ist. Das führt zum einen dazu, dass für die Wartung alle Verbindungen der Haltevorrichtungen zur Transporteinheit zunächst gelöst werden müssen, was komplex und zeitaufwendig ist. Die Haltevorrichtungen müssen aber nicht nur vollständig demontiert werden, sondern nach der Reinigung auch wieder fachgerecht montiert werden. Dadurch entstehen bei der Wartung lange Stillstandzeiten der Vorrichtung zur Verarbeitung, was zu einem Leistungsverlust der Vorrichtung führt. Ein weiterer Nachteil besteht darin, dass die bekannten Haltevorrichtungen für die Wartung aufgrund des hohen Gewichts nur schwer handzuhaben sind.

Dokument US 5,951,393 A offenbart eine Haltevorrichtung ausgebildet und eingerichtet zum Halten von entweideten Geflügelkörpern während der Verarbeitung in einer Vorrichtung zur Verarbeitung von entweideten Geflügelkörpern.

Der Erfindung liegt somit die Aufgabe zugrunde, eine einfache und leicht zu wartende Haltevorrichtung zu schaffen. Eine weitere Aufgabe der Erfindung liegt darin, eine leicht zu wartende Transportvorrichtung und Vorrichtung zur Verarbeitung von entweideten Geflügelkörpern oder Teilen davon zur Verfügung zu stellen. Die Aufgabe besteht weiterhin darin, ein einfaches und zuverlässiges Verfahren zum Warten von Haltevorrichtungen vorzuschlagen.

Diese Aufgabe wird durch eine Haltevorrichtung nach Anspruch 1 gelöst. Das bedeutet, dass bei einem Maschinenstillstand der Stützkörper leicht von dem Befestigungskörper gelöst werden kann, während der Befestigungskörper dauerhaft an der Transporteinheit bzw. in der Vorrichtung verbleiben kann. Damit entfällt zum einen das aufwendige Lösen der Befestigungskörper von der Transporteinheit. Die Demontage und Montage der Stützkörper ist dadurch wesentlich vereinfacht. Da Vorrichtungen zur Verarbeitungen üblicherweise eine Vielzahl von Haltevorrichtungen aufweisen, ist der Effekt erheblich. Die vergleichsweise leichten Stützkörper sind für das Bedienpersonal einfach handzuhaben und können der effektiven Reinigung zugeführt werden. Die Befestigungskörper einschließlich der Klemmeinrichtung können in eingebautem Zustand innerhalb der Vorrichtung gereinigt werden. Zusammengefasst vereinfacht sich die Reinigung des Stützkörpers durch leichtes Abnehmen und Aufstecken des Stützkörpers vom Befestigungskörper und schafft die Möglichkeit der Reinigung des Befestigungskörpers in der Vorrichtung (CIP = Clean In Place).

Eine besonders bevorzugte Weiterbildung der Erfindung ist dadurch gekennzeichnet, dass der Stützkörper mittels eines von außen zugänglichen Schnellverschlusssystems als Befestigungsmittel mit dem Befestigungskörper verbunden ist. Durch diese Ausbildung ist der Stützkörper besonders einfach und schnell mit einem Handgriff zu lösen und wieder aufzusetzen, wodurch sich die oben genannten Vorteile verstärken. Vorteilhafterweise umfasst das Schnellverschlusssystem Bolzen am Befestigungskörper einerseits und Ausnehmungen am Stützkörper andererseits, die form- und/oder kraftschlüssig ineinandergreifen. Damit ist ein besonders einfaches und sicheres Befestigungsmittel geschaffen, dass einerseits leicht handzuhaben ist und andererseits einen sicheren Halt des Stützkörpers am Befestigungskörper sicherstellt.

Gemäss der Erfindung sind am Befestigungskörper mindestens ein ortsfester Stützbolzen und mindestens ein bewegbarer Führungsbolzen angeordnet, wobei der Stützkörper entsprechende Ausnehmungen aufweist, in die der ortsfeste Stützbolzen und der bewegbare Führungsbolzen eingreifen. Zweckmäßigerweise sind am Befestigungskörper mindestens zwei Stützbolzen ortsfest angeordnet, die sich jeweils zu beiden Seiten des Befestigungskörpers erstrecken, und der mindestens eine bewegbare Führungsbolzen erstreckt sich ebenfalls zu beiden Seiten des Befestigungskörpers. Durch diese symmetrische Ausbildung des Befestigungsmittels ist zum einen das leichtgängige und verkantungsfreie Abnehmen und Aufsetzen des Stützkörpers optimiert und zum anderen wird damit eine sichere und stabile Verbindung zwischen Stützkörper und Befestigungskörper sichergestellt.

Eine bevorzugte Weiterbildung ist dadurch gekennzeichnet, dass der bewegbare Führungsbolzen an einem Betätigungshebel angeordnet ist, wobei der Betätigungshebel einerseits bewegbar am Befestigungskörper gelagert und andererseits federbelastet am Befestigungskörper angeordnet ist. Mit dem von außen, also in montiertem Zustand, zugänglichen Betätigungshebel und dessen Vorspannung gegen eine Federkraft ist das Lösen und Befestigen des Stützkörpers besonders einfach.

Vorzugsweise ist der bewegbare Führungsbolzen fest mit dem Betätigungshebel verbunden und erstreckt sich zu beiden Seiten des Betätigungshebels, wobei die freien Enden des Führungsbolzens in Langlöchern am Befestigungskörper geführt sind. Mit dieser Ausführungsform ist ein einfaches und sicheres Lösen und Befestigen des Stützkörpers auf dem Befestigungskörper gewährleistet.

Optional ist die aus Befestigungskörper und Klemmeinrichtung gebildete Einheit aus Metall, vorzugsweise aus Edelstahl hergestellt. Alternativ kann die Einheit auch aus anderen in der Nahrungsmittelindustrie zugelassenen Werkstoffen hergestellt sein. Es können auch Materialkombinationen aus Metall und Kunststoff verwendet werden. Die Edelstahlvariante weist jedoch besonders hohe Standzeiten auf und ist einfach und effektiv zu reinigen.

Vorteilhafterweise ist der Stützkörper einteilig ausgebildet und aus Kunststoff hergestellt. Da der Stützkörper in seiner äußeren Kontur mindestens teilweise an die Innenkontur der Geflügeltiere oder Teilen davon angepasst ist, läßt sich dies besonders einfach und kostengünstig als einteiliges Kunststoffteil umsetzen. Weiter bevorzugt wird der Stützkörper im Spritzgussverfahren, durch Fräsen aus dem Vollen oder mittels 3D-Druck hergestellt.

Die Aufgabe wird auch durch eine Transportvorrichtung der eingangs genannten Art dadurch gelöst, dass die oder jede Haltevorrichtung nach einem oder mehreren der Ansprüche 1 bis 8 ausgebildet und eingerichtet ist.

Die Aufgabe wird weiterhin dadurch gelöst, dass bei der Verwendung einer Transportvorrichtung in einer Vorrichtung zur Verarbeitung von entweideten Geflügelkörpern oder Teilen davon eine Transportvorrichtung nach Anspruch 9 eingesetzt wird.

Die Aufgabe wird auch durch eine Vorrichtung zur Verarbeitung von entweideten Geflügelkörpern oder Teilen davon der eingangs genannten Art dadurch gelöst, dass die Transportvorrichtung nach Anspruch 9 ausgebildet und eingerichtet ist.

Die Aufgabe wird weiterhin durch ein Verfahren mit den eingangs genannten Schritten dadurch gelöst, dass zur Wartung einer Haltevorrichtung ausschließlich der Stützkörper vom Befestigungskörper abgenommen wird, während der Befestigungskörper an der Transporteinheit verbleibt.

Vorzugsweise wird der Stützkörper durch Betätigen eines Schnellverschlusssystems, das in montiertem Zustand der Haltevorrichtung an der Transporteinheit von außen zugänglich ist, vom Befestigungskörper gelöst.

Die sich aus der erfindungsgemäßen Transportvorrichtung, der Verwendung derselben, der Vorrichtung zur Verarbeitung von entweideten Geflügelkörpern oder Teilen davon sowie dem Verfahren zur Wartung der Haltevorrichtung ergebenden Vorteile wurden bereits ausführlich im Zusammenhang mit der Haltevorrichtung beschrieben, weshalb zur Vermeidung von Wiederholungen auf die entsprechenden Passagen verwiesen wird.

Weitere zweckmäßige und/oder vorteilhafte Merkmale und Weiterbildungen der Haltevorrichtung, der Transortvorrichtung, der Verwendung, der Vorrichtung zur Verarbeitung von entweideten Geflügelkörpern oder Teilen davon sowie dem Verfahren zur Wartung der Haltevorrichtung ergeben sich aus den Unteransprüchen und der Beschreibung. Besonders bevorzugte Ausführungsformen der Vorrichtung werden anhand der beigefügten Zeichnung näher erläutert. In der Zeichnung zeigt:
- Fig. 1: eine schematische Darstellung einer Haltevorrichtung in perspektivischer Ansicht, wobei der Stützkörper mit dem Befestigungskörper und der Befestigungskörper mit der Transporteinheit verbunden ist,
- Fig. 2: die Haltevorrichtung gemäß Figur 1 in einer ersten Löseposition des Stützkörpers,
- Fig. 3: die Haltevorrichtung gemäß Figur 1 in einer fortgeschrittenen Löseposition,
- Fig. 4: die Haltevorrichtung gemäß Figur 1 in einer weiter fortgeschrittenen Löseposition,
- Fig. 5: die Haltevorrichtung gemäß Figur 1 mit einem vollständig vom Befestigungskörper gelösten Stützkörper,
- Fig. 6: eine Seitenansicht auf den Befestigungskörper,
- Fig. 7: eine Draufsicht auf den Befestigungskörper, und
- Fig. 8: eine schematische Darstellung eines Ausschnitts einer Transportvorrichtung in perspektivischer Ansicht.

Die in der Zeichnung dargestellte Haltevorrichtung dient zum Halten von Brustkappen von Geflügeltieren. Die erfindungsgemäße Haltevorrichtung ist jedoch in gleicher Weise zum Halten weiterer Geflügelteile ausgebildet und eingerichtet.

Die dargestellte Haltevorrichtung 10 ist zum Halten von entweideten Geflügelkörpern oder Teilen davon während der Verarbeitung in einer Vorrichtung zur Verarbeitung von entweideten Geflügelkörpern oder Teilen davon ausgebildet und eingerichtet. Die Haltevorrichtung 10 umfasst einen Stützkörper 11, der zum Stützen des Geflügelkörpers oder Teilen davon ausgebildet und eingerichtet ist. Weiterhin umfasst die Haltevorrichtung 10 einen Befestigungskörper 12, der zum Halten des Stützkörpers 11 einerseits und zum Befestigen der Haltevorrichtung 10 an einer umlaufenden Transporteinheit 13 der Vorrichtung zur Verarbeitung von entweideten Geflügelkörpern oder Teilen davon andererseits ausgebildet und eingerichtet ist. Die Haltevorrichtung 10 umfasst auch eine Klemmeinrichtung 14 zum Fixieren des Geflügelkörpers oder Teilen davon auf dem Stützkörper 11 während der Verarbeitung.

Diese Haltevorrichtung 10 zeichnet sich erfindungsgemäß dadurch aus, dass der Stützkörper 11 mittels eines Befestigungsmittels 15 lösbar mit dem Befestigungskörper 12 verbunden ist, wobei das Befestigungsmittel 15 derart ausgebildet und eingerichtet ist, dass es in montiertem Zustand der Haltevorrichtung 10 an der Transporteinheit 13 zum Lösen des Stützkörpers 11 vom Befestigungskörper 12 von außen zugänglich ist. Eine Betätigung des Befestigungsmittels 15 - manuell und/oder mit einem Werkzeug - und damit das Entfernen des Stützkörpers 11 vom Befestigungskörper 12 ist somit durch eine Bedienperson möglich, wenn das Befestigungsmittel 12 mit der Transporteinheit 13 verbunden ist.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Haltevorrichtung 10 weiterbilden können.

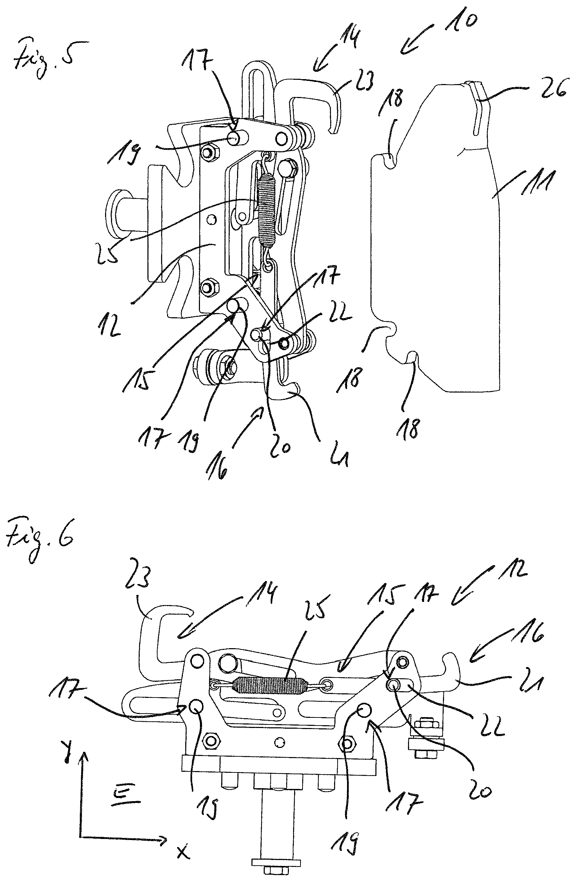

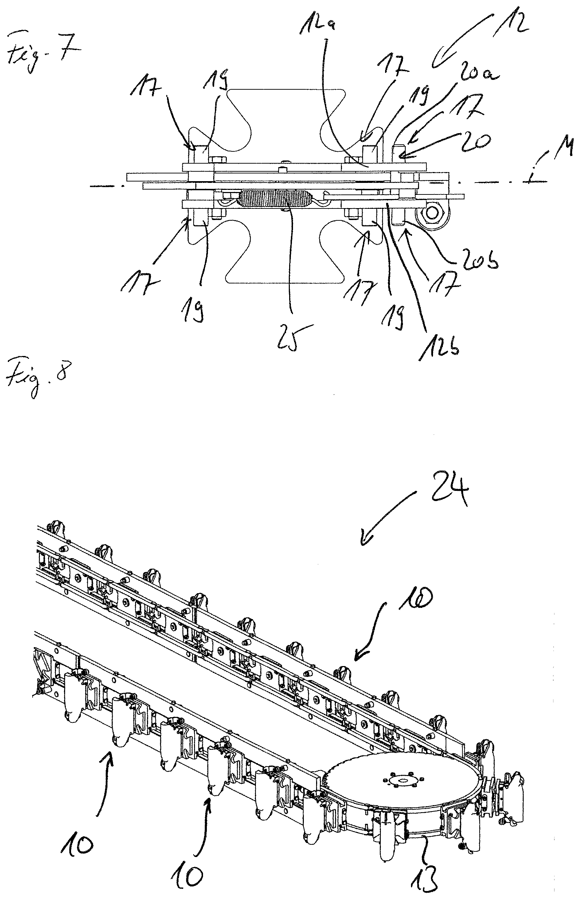

Der Stützkörper 11 kann optional mit Schrauben oder dergleichen als Befestigungsmittel 15, die von außen zugänglich sind, mit dem Befestigungskörper 12 verbunden sein. Dazu ist der Stützkörper 11 haubenartig von oben auf den Befestigungskörper 12 aufgesteckt und mit dem Befestigungsmittel 15 fixiert. Der Stützkörper 11 und der Befestigungskörper 12 definieren eine Mittelebene E (siehe insbesondere Figur 6, E aufgespannt zwischen x- und y-Achse), die parallel zur Mittelachse M (siehe insbesondere Figur 7) der Haltevorrichtung 10 verläuft. Bevorzugt ist der Stützkörper 11 mittels eines von außen zugänglichen Schnellverschlusssystems 16 als Befestigungsmittel 15 mit dem Befestigungskörper 12 verbunden. Das Schnellverschlusssystem 16 kann einen Spann- und/oder Klemm- und/oder Rastmechanismus oder dergleichen umfassen.

Vorzugsweise umfasst das Schnellverschlusssystem 16 Bolzen 17 am Befestigungskörper 12 einerseits und Ausnehmungen 18 am Stützkörper 11 andererseits. Die am Befestigungskörper 12 angeordneten Bolzen 17 greifen in montiertem Zustand des Stützkörpers 11 auf dem Befestigungskörper 12 form- und/oder kraftschlüssig in die Ausnehmungen 18 am Stützkörper 11. Es kann ausschließlich formschlüssige Kontakte, ausschließlich kraftschlüssige Kontakte sowie kombinierte form- und kraftschlüssige Kontakte geben. Als Bolzen 17 wird jede Art von Pin, Achsabschnitt, Profil oder dergleichen verstanden, solange ein ausreichend großer Vorsprung existiert, der zum Eingreifen/Hintergreifen in die Ausnehmungen 18 im Stützkörper 11 ausgebildet und eingerichtet ist.

Bevorzugt sind am Befestigungskörper 12 mindestens ein ortsfester Stützbolzen 19 und mindestens ein bewegbarer Führungsbolzen 20 angeordnet, wobei der Stützkörper 11 entsprechende Ausnehmungen 18 aufweist, in die der ortsfeste Stützbolzen 19 und der bewegbare Führungsbolzen 20 eingreifen. In der dargestellten Ausführungsform sind am Befestigungskörper 12 mindestens zwei Stützbolzen 19 ortsfest angeordnet, die sich jeweils zu beiden Seiten des Befestigungskörpers 12 erstrecken. Der mindestens eine bewegbare Führungsbolzen 20 erstreckt sich ebenfalls zu beiden Seiten des Befestigungskörpers 12. Die Erstreckung zu beiden Seiten bedeutet, dass freie Enden der Stützbolzen 19 und des Führungsbolzens 20 seitlich und damit vorzugsweise quer zur Mitteleben E aus dem Befestigungskörper 12 bzw. Seitenwänden 12a, 12b desselben vorstehen (siehe insbesondere Figur 7). Die Anzahl der Stützbolzen 19 und deren Positionierung kann variieren. Entsprechendes gilt für den Führungsbolzen 20.

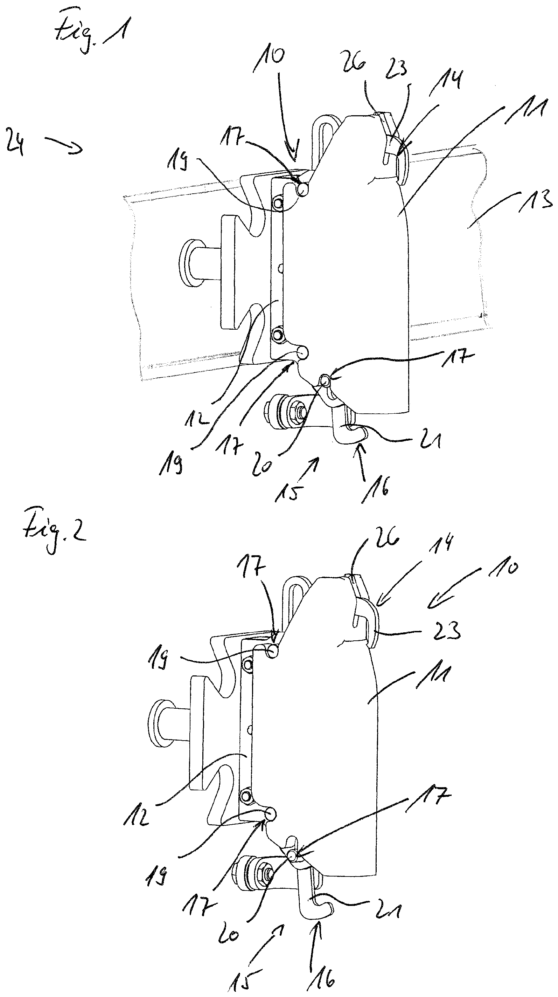

Vorzugsweise ist der bewegbare Führungsbolzen 20 an einem Betätigungshebel 21 angeordnet, wobei der Betätigungshebel 21 einerseits bewegbar am Befestigungskörper 12 gelagert und andererseits federbelastet am Befestigungskörper 12 angeordnet ist. Der Betätigungshebel 21 ragt in montiertem Zustand des Stützkörpers 11 auf dem Befestigungskörper 12 aus/unter dem Stützkörper 11 hervor, so dass ein permanenter Zugriff gewährleistet ist. Eine bevorzugte Lagerung des Betätigungshebels 21 am Befestigungskörper 12 ist dadurch realisiert, dass der bewegbare Führungsbolzen 20 fest mit dem Betätigungshebel 21 verbunden ist und sich zu beiden Seiten des Betätigungshebels 21 - quer zur Mittelebene E - erstreckt, wobei die freien Enden 20a, 20b des Führungsbolzens 20 in Langlöchern 22 am Befestigungskörper 12 bzw. in den Seitenwänden 12a, 12b geführt sind. Die Federbelastung kann durch ein Federelement 25 erzeugt werden. Dazu ist an einem freien Ende des Betätigungshebels 21 das Federelement 25 befestigt. Das gegenüberliegende Ende des Federelementes 25 ist am Befestigungskörper 12 befestigt. Durch das Federelement 25 wirkt eine Federspannung auf den Betätigungshebel 21, der den Betätigungshebel 21 und damit den Führungsbolzen 20 bzw. die Führungsbolzen 20 innerhalb des Langloches 22 in der Schließstellung hält (siehe z. B. Figur 1). Bevorzugt sind die Sicherungsbolzen 19 und die Führungsbolzen 20 sowie die Langlöcher 22 symmetrisch zur Mittelebene E angeordnet. Entsprechend sind auch die Ausnehmungen 18 im Stützkörper 11 symmetrisch angeordnet bzw. ausgebildet. Es sind aber auch asymmetrische Anordnungen und Ausbildungen möglich. Gegen die Federkraft des Federelementes 25 ist der Führungsbolzen 20 durch Betätigung des Betätigungshebels 21 in eine Freigabestellung bewegbar (siehe Figurenfolge 2 bis 4), so dass der oder jeder Führungsbolzen 20 mit seinen freien Enden 20a, 20b aus der Ausnehmung 18 bzw. den Ausnehmungen 18 am Stützkörper 11 bewegt wird, um diesen freizugeben. Selbstverständlich sind andere Klemm- und/oder Rast- und/oder Steckmechanismen ebenfalls einsetzbar.

Die aus Befestigungskörper 12 und Klemmeinrichtung 14 gebildete Einheit ist bevorzugt aus Metall, vorzugsweise aus Edelstahl hergestellt. Andere Materialien oder Materialkombinationen sind aber ebenfalls einsetzbar. Die Klemmeinrichtung 14 ist Bestandteil des Befestigungskörpers 12 und mit diesem verbunden bzw. an diesem angeordnet. Die Klemmeinrichtung 14 kann starr ausgebildet sein. Optional umfasst die Klemmeinrichtung 14 einen schwenkbaren Hebel 23, der aus einer Freigabeposition in eine Klemmposition und zurück schwenkbar am Befestigungskörper 12 gelagert ist. Der Hebel 23 greift in montiertem Zustand in eine schlitzförmige Ausnehmung 26 im Stützkörper 11. Der Stützkörper 11 ist bevorzugt einteilig ausgebildet und aus Kunststoff hergestellt. Weiter bevorzugt wird der Stützkörper im Spritzgussverfahren, durch Fräsen aus dem Vollen oder mittels 3D-Druck hergestellt. Optional kann der Stützkörper 11 auch aus anderen Materialien bestehen und auch mit anderen Herstellungsverfahren hergestellt sein.

Die Haltevorrichtung 10 kann als Einzelteil, Nachrüstsatz oder Austauschteil ausgebildet sein. Üblicherweise sind solche Haltevorrichtungen 10 jedoch Bestandteil einer Transportvorrichtung 24. Transportvorrichtungen 24 sind zum Transportieren von Geflügelbrustkappen oder anderen Geflügelteilen ausgebildet und eingerichtet und umfassen eine (mittels nicht explizit dargestelltem Antrieb) umlaufend angetriebene Transporteinheit 13 sowie mindestens eine daran befestigte Haltevorrichtung 10, die zum Halten der entweideten Geflügelkörper oder Teilen davon während der Verarbeitung in einer Vorrichtung zur Verarbeitung von entweideten Geflügelkörpern oder Teilen davon ausgebildet und eingerichtet ist. Üblicherweise ist jedoch eine Vielzahl der Haltevorrichtungen 10 an der Transporteinheit 13 befestigt (siehe insbesondere Figur 8). Bevorzugt ist die oder jede Haltevorrichtung 10 nach einem oder mehreren der Ansprüche 1 bis 9 ausgebildet und eingerichtet und damit gemäß der vorstehenden Beschreibung. Die Transporteinheit 13 ist bevorzugt eine Transportkette, an der die Haltevorrichtungen 10 über ihre Befestigungskörper 12 lösbar befestigt sind.

Solche Transportvorrichtungen 24 nach Anspruch 10, wie sie vorstehend beschrieben sind, sind bevorzugt in einer Vorrichtung zur Verarbeitung von entweideten Geflügelkörpern oder Teilen davon angeordnet.

Diese Vorrichtungen sind zur Verarbeitung von entweideten Geflügelkörpern oder Teilen davon ausgebildet und eingerichtet und umfassen mindestens eine Bearbeitungsstation zum Bearbeiten der Geflügelkörper oder Teilen davon sowie eine Transportvorrichtung 24 zum Transportieren der Geflügelkörper oder Teilen davon entlang der oder jeder Bearbeitungsstation, wobei die Transportvorrichtung 24 nach Anspruch 10 ausgebildet und eingerichtet ist, wie vorstehend beschrieben.

Im Folgenden wird das erfindungsgemäße Verfahren zur Wartung der Haltevorrichtung 10 beschrieben. Das Warten der Haltevorrichtung 10 wird beispielhaft für das Reinigen der Haltevorrichtung 10 beschrieben. Das Verfahren zur Reinigen einer Haltevorrichtung 10, die zum Halten von entweideten Geflügelkörpern oder Teilen davon während der Verarbeitung in einer Vorrichtung zur Verarbeitung von entweideten Geflügelkörpern oder Teilen davon ausgebildet und eingerichtet ist, wobei die Haltevorrichtung 10 einen Befestigungskörper 12, mit dem die Haltevorrichtung 10 an einer Transporteinheit 13 der Vorrichtung zur Verarbeitung befestigt ist, und einen Stützkörper 11, der lösbar an dem Befestigungskörper 12 angeordnet und zum Stützen von Geflügelkörpern oder Teilen davon ausgebildet und eingerichtet ist, umfasst, zeichnet sich erfindungsgemäß dadurch aus, dass zur Wartung der Haltevorrichtung 10 ausschließlich der Stützkörper 11 vom Befestigungskörper 12 abgenommen wird, während der Befestigungskörper 12 an der Transporteinheit 13 verbleibt.

Vorzugsweise wird der Stützkörper 11 durch Betätigen eines Schnellverschlusssystems 16, das in montiertem Zustand der Haltevorrichtung 10 an der Transporteinheit 13 von außen zugänglich ist, vom Befestigungskörper 12 gelöst.

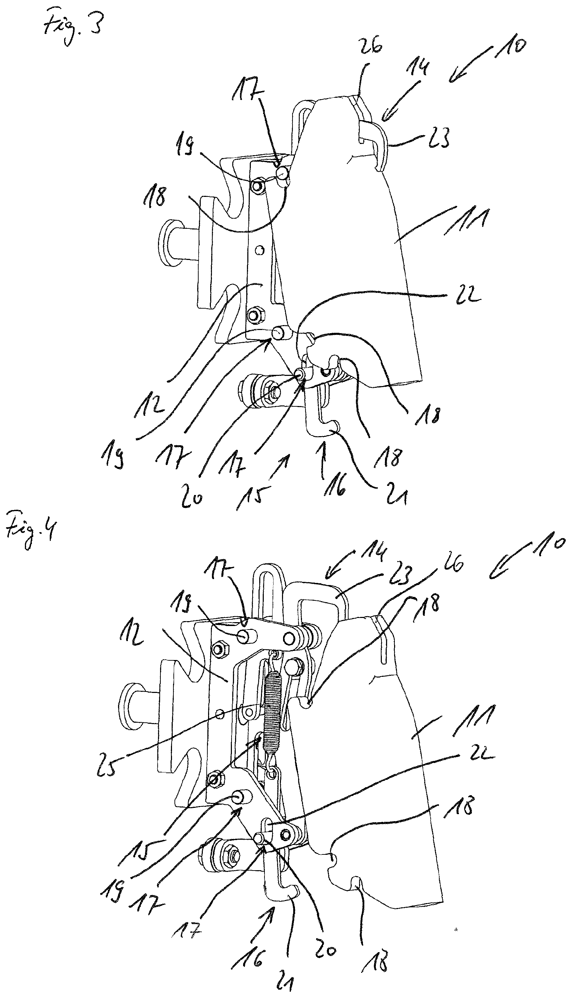

Zunächst werden Geflügelkörper oder Teile davon in der Vorrichtung zur Verarbeitung verarbeitet. Dazu laufen die Haltevorrichtungen 10 mittels der Transporteinheit 13 entlang der Bearbeitungsstationen und Verschmutzen dabei erheblich. Zu Zwecken der Wartung/Reinigung wird die Vorrichtung angehalten. Noch befinden sich die Stützkörper 11 fest auf dem Befestigungskörper 12, indem die Stützbolzen 19 und die Führungsbolzen 20 form- und/oder kraftschlüssig in den Ausnehmungen 18 des Stützkörpers 11 sitzen (siehe Figur 1). Eine oder mehrere Bedienpersonen lösen mittels des Schnellverschlusssystems 16 die Stützkörper 11 vom Befestigungskörper 12, indem der Betätigungshebel 21 - im vorliegenden Fall - nach hinten/unten gedrückt wird. Bei anderen Orientierungen der Haltevorrichtung 10 kann das Betätigen auch zur Seite oder nach oben erfolgen. Dadurch wird der oder jeder Führungsbolzen 20 im Langloch 22 nach unten (oben/zur Seite) gezogen, bis der oder jeder Führungsbolzen 20 vollständig aus der korrespondierenden Ausnehmung 18 des Stützkörpers 11 bewegt ist (siehe Figur 2). Durch die Freigabe des Stützkörpers 11 im Bereich der Führungsbolzen 20 kann der Stützkörper 11 quasi von den Stützbolzen 19 abgehoben werden, vorzugsweise durch eine Art Kippbewegung (siehe Figuren 3 und 4). Der nunmehr vollständig vom Befestigungskörper 12 gelöste Stützkörper 11 kann in einen Reinigungsbehälter oder dergleichen gelegt und gereinigt werden. Die Bedienperson hat lediglich den gewichtsmäßig leichten Stützkörper 11 zu bewegen. Der gewichtsmäßig schwere Befestigungskörper 12 verbleibt an der Transporteinheit 13 und kann mit dieser und zusammen mit der Klemmeinrichtung 14 in Position gereinigt werden. Nach dem Reinigen der Haltevorrichtung 10 kann der Stützkörper 11 wieder in umgekehrter Reihenfolge auf den Befestigungskörper 12 gebracht und mit dem Schnellverschlusssystem 16 fixiert werden. Anstelle der Reinigung können so auch einzelne Stützkörper 11 ausgetauscht oder repariert werden. Auch die Reparatur am Befestigungskörper 12 und/oder an der Klemmeinrichtung14 kann in entsprechender Weise durchgeführt werden.

## Patentansprüche

1. Haltevorrichtung (10), ausgebildet und eingerichtet zum Halten von entweideten Geflügelkörpern oder Teilen davon während der Verarbeitung in einer Vorrichtung zur Verarbeitung von entweideten Geflügelkörpern oder Teilen davon, umfassend einen Stützkörper (11), ausgebildet und eingerichtet zum Stützen des Geflügelkörpers oder Teilen davon, einen Befestigungskörper (12), ausgebildet und eingerichtet zum Halten des Stützkörpers (11) einerseits und zum Befestigen der Haltevorrichtung (10) an einer umlaufenden Transporteinheit (13) der Vorrichtung zur Verarbeitung von entweideten Geflügelkörpern oder Teilen davon andererseits, sowie eine Klemmeinrichtung (14) zum Fixieren des Geflügelkörpers oder Teilen davon auf dem Stützkörper (11) während der Verarbeitung, wobei der Stützkörper (11) mittels eines Befestigungsmittels (15) lösbar mit dem Befestigungskörper (12) verbunden ist, wobei das Befestigungsmittel (15) derart ausgebildet und eingerichtet ist, dass es in montiertem Zustand der Haltevorrichtung (10) an der Transporteinheit (13) zum Lösen des Stützkörpers (11) vom Befestigungskörper (12) von außen zugänglich ist, **dadurch gekennzeichnet, dass** am Befestigungskörper (12) mindestens ein ortsfester Stützbolzen (19) und mindestens ein bewegbarer Führungsbolzen (20) angeordnet sind, wobei der Stützkörper (11) entsprechende Ausnehmungen (18) aufweist, in die der ortsfeste Stützbolzen (19) und der bewegbare Führungsbolzen (20) eingreifen.

2. Haltevorrichtung (10) nach Anspruch 1, **dadurch gekennzeichnet, dass** der Stützkörper (11) mittels eines von außen zugänglichen Schnellverschlusssystems (16) als Befestigungsmittel (15) mit dem Befestigungskörper (12) verbunden ist.

3. Haltevorrichtung (10) nach Anspruch 1 oder 2, **dadurch gekennzeichnet, dass** das Schnellverschlusssystem (16) Bolzen (17) am Befestigungskörper (12) einerseits und Ausnehmungen (18) am Stützkörper (11) andererseits umfasst, die form- und/oder kraftschlüssig ineinandergreifen.

4. Haltevorrichtung (10) nach Anspruch 1, **dadurch gekennzeichnet, dass** am Befestigungskörper (12) mindestens zwei Stützbolzen (19) ortsfest angeordnet sind, die sich jeweils zu beiden Seiten des Befestigungskörpers (12) erstrecken, und dass sich der mindestens eine bewegbare Führungsbolzen (20) ebenfalls zu beiden Seiten des Befestigungskörpers (12) erstreckt.

5. Haltevorrichtung (10) nach Anspruch 4, **dadurch gekennzeichnet, dass** der bewegbare Führungsbolzen (20) an einem Betätigungshebel (21) angeordnet ist, wobei der Betätigungshebel (21) einerseits bewegbar am Befestigungskörper (12) gelagert und andererseits federbelastet am Befestigungskörper (12) angeordnet ist.

6. Haltevorrichtung (10) nach Anspruch 5, **dadurch gekennzeichnet, dass** der bewegbare Führungsbolzen (20) fest mit dem Betätigungshebel (21) verbunden ist und sich zu beiden Seiten des Betätigungshebels (21) erstreckt, wobei die freien Enden (20a, 20b) des Führungsbolzens (20) in Langlöchern (22) am Befestigungskörper (12) geführt sind.

7. Haltevorrichtung (10) nach einem oder mehreren der Ansprüche 1 bis 6, **dadurch gekennzeichnet, dass** die aus Befestigungskörper (12) und Klemmeinrichtung (14) gebildete Einheit aus Metall, vorzugsweise aus Edelstahl hergestellt ist.

8. Haltevorrichtung (10) nach einem oder mehreren der Ansprüche 1 bis 7, **dadurch gekennzeichnet, dass** der Stützkörper (11) einteilig ausgebildet und aus Kunststoff hergestellt ist.

9. Transportvorrichtung (24), ausgebildet und eingerichtet zum Transportieren von entweideten Geflügelkörpern oder Teilen davon, umfassend eine umlaufend angetriebene Transporteinheit (13) sowie mindestens eine daran befestigte Haltevorrichtung (10), die zum Halten der entweideten Geflügelkörper oder Teilen davon während der Verarbeitung in einer Vorrichtung zur Verarbeitung von entweideten Geflügelkörpern oder Teilen davon ausgebildet und eingerichtet ist, **dadurch gekennzeichnet, dass** die oder jede Haltevorrichtung (10) nach einem oder mehreren der Ansprüche 1 bis 8 ausgebildet und eingerichtet ist.

10. Verwendung einer Transportvorrichtung (24) nach Anspruch 9 in einer Vorrichtung zur Verarbeitung von entweideten Geflügelkörpern oder Teilen davon.

11. Vorrichtung zur Verarbeitung von entweideten Geflügelkörpern oder Teilen davon, umfassend mindestens eine Bearbeitungsstation zum Bearbeiten der Geflügelkörper oder Teilen davon sowie eine Transportvorrichtung (24) zum Transportieren der Geflügelkörper oder Teilen davon entlang der oder jeder Bearbeitungsstation, **dadurch gekennzeichnet, dass** die Transportvorrichtung (24) nach Anspruch 9 ausgebildet und eingerichtet ist.

12. Verfahren zur Wartung einer Haltevorrichtung (10) nach einem oder mehreren der Ansprüche 1 bis 8, die zum Halten von entweideten Geflügelkörpern oder Teilen davon während der Verarbeitung in einer Vorrichtung zur Verarbeitung von entweideten Geflügelkörpern oder Teilen davon ausgebildet und eingerichtet ist, wobei die Haltevorrichtung (10) einen Befestigungskörper (12), mit dem die Haltevorrichtung (10) an einer Transporteinheit (13) der Vorrichtung zur Verarbeitung befestigt ist, und einen Stützkörper (11), der lösbar an dem Befestigungskörper (12) angeordnet und zum Stützen von Geflügelkörpern oder Teilen davon ausgebildet und eingerichtet ist, umfasst, **dadurch gekennzeichne**t, dass zur Wartung der Haltevorrichtung (10) ausschließlich der Stützkörper (11) vom Befestigungskörper (12) abgenommen wird, während der Befestigungskörper (12) an der Transporteinheit (13) verbleibt.

13. Verfahren nach Anspruch 12, **dadurch gekennzeichnet, dass** der Stützkörper (11) durch Betätigen eines Schnellverschlusssystems (16), das in montiertem Zustand der Haltevorrichtung (10) an der Transporteinheit (13) von außen zugänglich ist, vom Befestigungskörper (12) gelöst wird.

## Claims

1. Holding apparatus (10) configured and adapted for holding eviscerated poultry carcasses or parts thereof during processing in an apparatus for processing eviscerated poultry carcasses or parts thereof, comprising a supporting body (11) configured and adapted for supporting the poultry carcass or parts thereof, a fastening body (12) configured and adapted for holding the supporting body (11) on the one hand and for fastening the holding apparatus (10) to a revolving transport unit (13) of the apparatus for processing eviscerated poultry carcasses or parts thereof on the other hand, and also a clamping device (14) for fixing the poultry carcass or parts thereof on the supporting body (11) during processing, wherein the supporting body (11) is detachably connected to the fastening body (12) by means of a fastening means (15), the fastening means (15) being so configured and adapted that, in the mounted state of the holding apparatus (10) on the transport unit (13), it is accessible from outside for detaching the supporting body (11) from the fastening body (12), **characterised in that** at least one stationary supporting bolt (19) and at least one movable guide bolt (20) are arranged on the fastening body (12), the supporting body (11) having corresponding recesses (18) in which the stationary supporting bolt (19) and the movable guide bolt (20) engage.

2. Holding apparatus (10) according to claim 1, **characterised in that** the supporting body (11) is connected to the fastening body (12) by means of a quick-action locking system (16) which is accessible from outside as the fastening means (15).

3. Holding apparatus (10) according to claim 1 or 2, **characterised in that** the quick-action locking system (16) comprises bolts (17) on the fastening body (12) on the one hand and recesses (18) on the supporting body (11) on the other hand which engage with one another in a form-fitting and/or force-fitting manner.

4. Holding apparatus (10) according to claim 1, **characterised in that** at least two supporting bolts (19) are arranged in a stationary manner on the fastening body (12), each of them extending on either side of the fastening body (12), and **in that** the at least one movable guide bolt (20) likewise extends on either side of the fastening body (12).

5. Holding apparatus (10) according to claim 4, **characterised in that** the movable guide bolt (20) is arranged on an actuating lever (21), wherein the actuating lever (21) on the one hand is movably mounted on the fastening body (12) and on the other hand is arranged in a spring-loaded manner on the fastening body (12).

6. Holding apparatus (10) according to claim 5, **characterised in that** the movable guide bolt (20) is fixedly connected to the actuating lever (21) and extends on either side of the actuating lever (21), wherein the free ends (20a, 20b) of the guide bolt (20) are guided in elongated holes (22) on the fastening body (12).

7. Holding apparatus (10) according to one or more of claims 1 to 6, **characterised in that** the unit formed of the fastening body (12) and the clamping device (14) is made of metal, preferably of stainless steel.

8. Holding apparatus (10) according to one or more of claims 1 to 7, **characterised in that** the supporting body (11) is in one-part form and is made of plastics material.

9. Transport apparatus (24) configured and adapted for transporting eviscerated poultry carcasses or parts thereof, comprising a revolvingly driven transport unit (13) and at least one holding apparatus (10) attached thereto, which is configured and adapted for holding the eviscerated poultry carcasses or parts thereof during processing in an apparatus for processing eviscerated poultry carcasses or parts thereof, **characterised in that** the or each holding apparatus (10) is configured and adapted according to one or more of claims 1 to 8.

10. Use of a transport apparatus (24) according to claim 9 in an apparatus for processing eviscerated poultry carcasses or parts thereof.

11. Apparatus for processing eviscerated poultry carcasses or parts thereof, comprising at least one processing station for processing the poultry carcasses or parts thereof and a transport apparatus (24) for transporting the poultry carcasses or parts thereof along the or each processing station, **characterised in that** the transport apparatus (24) is configured and adapted according to claim 9.

12. Method for the maintenance of a holding apparatus (10) according to one or more of claims 1 to 8, which is configured and adapted for holding eviscerated poultry carcasses or parts thereof during processing in an apparatus for processing eviscerated poultry carcasses or parts thereof, wherein the holding apparatus (10) comprises a fastening body (12) with which the holding apparatus (10) is fastened to a transport unit (13) of the apparatus for processing, and a supporting body (11) which is detachably arranged on the fastening body (12) and is configured and adapted for supporting poultry carcasses or parts thereof, **characterised in that**, for maintenance of the holding apparatus (10), only the supporting body (11) is removed from the fastening body (12), while the fastening body (12) remains on the transport unit (13).

13. Method according to claim 12, **characterised in that** the supporting body (11) is detached from the fastening body (12) by actuation of a quick-action locking system (16) which, in the mounted state of the holding apparatus (10) on the transport unit (13), is accessible from outside.

## Revendications

1. Dispositif de maintien (10), configuré et adapté pour maintenir des carcasses de volaille éviscérées ou des parties de celles-ci pendant le traitement dans un dispositif de traitement de carcasses de volaille éviscérées ou de parties de celles-ci, comprenant un corps de support (11), configuré et adapté pour supporter la carcasse de volaille ou des parties de celle-ci, un corps de fixation (12) configuré et adapté pour maintenir le corps de support (11) d'une part et pour fixer le dispositif de maintien (10) à une unité de transport circulaire (13) du dispositif de traitement de carcasses de volaille éviscérées ou de parties de celles-ci d'autre part, ainsi qu'un appareil de serrage (14) pour attacher la carcasse de volaille ou des parties de celle-ci sur le corps de support (11) pendant le traitement, le corps de support (11) étant relié de manière amovible au corps de fixation (12) au moyen d'un moyen de fixation (15), le moyen de fixation (15) étant configuré et adapté de telle sorte qu'il soit accessible de l'extérieur à l'état monté du dispositif de maintien (10) sur l'unité de transport (13) pour détacher le corps de support (11) du corps de fixation (12), **caractérisé en ce qu'**au moins un boulon de support fixe (19) et au moins un boulon de guidage mobile (20) sont agencés sur le corps de fixation (12), le corps de support (11) présentant des évidements (18) correspondants dans lesquels s'engagent le boulon de support fixe (19) et le boulon de guidage mobile (20).

2. Dispositif de maintien (10) selon la revendication 1, **caractérisé en ce que** le corps de support (11) est relié au corps de fixation (12) au moyen d'un système de fermeture rapide (16) accessible de l'extérieur en tant que moyen de fixation (15).

3. Dispositif de maintien (10) selon la revendication 1 ou 2, **caractérisé en ce que** le système de fermeture rapide (16) comprend des boulons (17) sur le corps de fixation (12) d'une part et des évidements (18) sur le corps de support (11) d'autre part, qui s'engagent les uns dans les autres par complémentarité de forme et/ou par adhérence.

4. Dispositif de maintien (10) selon la revendication 1, **caractérisé en ce qu'**au moins deux boulons de support (19) sont agencés de manière fixe sur le corps de fixation (12), s'étendant chacun des deux côtés du corps de fixation (12), et **en ce que** l'au moins un boulon de guidage mobile (20) s'étend également des deux côtés du corps de fixation (12).

5. Dispositif de maintien (10) selon la revendication 4, **caractérisé en ce que** le boulon de guidage mobile (20) est agencé sur un levier d'actionnement (21), le levier d'actionnement (21) étant d'une part monté de manière mobile sur le corps de fixation (12) et d'autre part agencé de manière à être sollicité par ressort sur le corps de fixation (12).

6. Dispositif de maintien (10) selon la revendication 5, **caractérisé en ce que** le boulon de guidage mobile (20) est relié de manière fixe au levier d'actionnement (21) et s'étend des deux côtés du levier d'actionnement (21), les extrémités libres (20a, 20b) du boulon de guidage (20) étant guidées dans des trous oblongs (22) sur le corps de fixation (12).

7. Dispositif de maintien (10) selon une ou plusieurs des revendications 1 à 6, **caractérisé en ce que** l'unité formée par le corps de fixation (12) et l'appareil de serrage (14) est fabriquée en métal, de préférence en acier inoxydable.

8. Dispositif de maintien (10) selon une ou plusieurs des revendications 1 à 7, **caractérisé en ce que** le corps de support (11) est configuré d'un seul tenant et est fabriqué en matière plastique.

9. Dispositif de transport (24), configuré et adapté pour transporter des carcasses de volaille éviscérées ou des parties de celles-ci, comprenant une unité de transport (13) entraînée de manière circulaire ainsi qu'au moins un dispositif de maintien (10) fixé à celle-ci, qui est configuré et adapté pour maintenir les carcasses de volaille éviscérées ou des parties de celles-ci pendant le traitement dans un dispositif de traitement de carcasses de volaille éviscérées ou de parties de celles-ci, **caractérisé en ce que** le ou chaque dispositif de maintien (10) est configuré et adapté selon une ou plusieurs des revendications 1 à 8.

10. Utilisation d'un dispositif de transport (24) selon la revendication 9 dans un dispositif de traitement de carcasses de volaille éviscérées ou de parties de celles-ci.

11. Dispositif de traitement de carcasses de volaille éviscérées ou de parties de celles-ci, comprenant au moins une station de traitement pour traiter les carcasses de volaille ou des parties de celles-ci, ainsi qu'un dispositif de transport (24) pour transporter les carcasses de volaille ou des parties de celles-ci le long de la ou de chaque station de traitement, **caractérisé en ce que** le dispositif de transport (24) est configuré et adapté selon la revendication 9.

12. Procédé d'entretien d'un dispositif de maintien (10) selon une ou plusieurs des revendications 1 à 8, qui est configuré et adapté pour maintenir des carcasses de volaille éviscérées ou des parties de celles-ci pendant le traitement dans un dispositif de traitement de carcasses de volaille éviscérées ou de parties de celles-ci, le dispositif de maintien (10) comprenant un corps de fixation (12) avec lequel le dispositif de maintien (10) est fixé à une unité de transport (13) du dispositif de traitement, et un corps de support (11) qui est agencé de manière amovible sur le corps de fixation (12) et qui est configuré et adapté pour supporter des carcasses de volaille ou des parties de celles-ci, **caractérisé en ce que**, pour l'entretien du dispositif de maintien (10), seul le corps de support (11) est retiré du corps de fixation (12), tandis que le corps de fixation (12) reste sur l'unité de transport (13).

13. Procédé selon la revendication 12, **caractérisé en ce que** le corps de support (11) est détaché du corps de fixation (12) en actionnant un système de fermeture rapide (16) qui est accessible de l'extérieur à l'état monté du dispositif de maintien (10) sur l'unité de transport (13).
